# EUROPÄISCHE PATENTANMELDUNG

(11) **EP 4 825 761 A1**
(43) Veröffentlichungstag der Anmeldung: **21.10.2026**
(21) Anmeldenummer: 26172245.8
(22) Anmeldetag: 14.04.2026
(51) Int. Cl.: B65G 23/06, A01K 39/00, B65G 19/14, B65G 19/26, B65G 23/04, B65G 23/19, F16H 55/30

(54) **ANTRIEBSRAD FÜR EINEN STAUSCHEIBENFÖRDERER UND STAUSCHEIBENFÖRDERER MIT EINEM SOLCHEN ANTRIEBSRAD**

(30) Priorität: 14.04.2025 LU 601105
(71) Anmelder: Big Dutchman International GmbH, 49377 Vechta (DE)
(72) Erfinder: Schreiber, Andreas, 27793 Wildeshausen (DE)
(74) Vertreter: Eisenführ Speiser

(57) **Zusammenfassung**

Die Erfindung bezieht sich auf ein Antriebsrad (10, 10') für einen Stauscheibenförderer (80), insbesondere für eine Futterketten-Vorrichtung zum Fördern von Futtermittel für die Trockenfütterung von Nutztieren, aufweisend:
- einen mit einem axialen Durchgang (18) zur Aufnahme einer Antriebswelle (82) versehenen Radkörper (12, 12'), und
- mehrere am Umfangsbereich (14) des Radkörpers (12, 12') in im Wesentlichen radialer Richtung abstehende Mitnehmer (16),
wobei an einem, mehreren oder allen Mitnehmern (16) wenigstens ein Rollenelement (32, 32') angeordnet ist, welches dazu eingerichtet ist, als Kraftübertragungselement mit im Abstand entlang eines Zugkörpers (88) angeordneten Stauscheiben (90) eines Stauscheibenförderers (80) in Anlage gebracht zu werden.

## Beschreibung

Die Erfindung bezieht sich auf ein Antriebsrad für einen Stauscheibenförderer, insbesondere für eine Futterketten-Vorrichtung zum Fördern von Futtermittel für die Trockenfütterung von Nutztieren, aufweisend einen mit einem axialen Durchgang zur Aufnahme einer Antriebswelle versehenen Radkörper, und mehrere am Umfangsbereich des Radkörpers in im Wesentlichen radialer Richtung abstehende Mitnehmer. Die Erfindung betrifft des Weiteren einen Stauscheibenförderer, insbesondere eine Futterketten-Vorrichtung zum Fördern von Futtermittel sowie eine Fütterungsanlage für die Trockenfütterung von Nutztieren.

In der Nutztierhaltung, insbesondere der Schweinehaltung, wird zur Fütterung der Nutztiere üblicherweise Trockenfutter in Form von Mehl, Krümeln oder Pellets verwendet. Die Fütterung der Nutztiere erfolgt unter Einsatz von Fütterungsanlagen, mittels derer das Futtermittel von einem Futtersilo über eine Futterleitung zu Futterstationen, wie beispielsweise Futterautomaten für die Einzelfütterung in der Ferkelaufzucht oder der Schweinemast oder Abruffütterungsstationen für die Gruppenhaltung, transportiert wird. An den Fütterungsanlagen kommen häufig Stauscheibenförderer, insbesondere Futterketten-Vorrichtungen, zur Anwendung, welche ein in der Futterleitung geführtes Zugelement, welches einen durchgehenden Zugkörper und entlang des Zugkörpers mit Abstand in Zugrichtung zueinander angeordnete Stauscheiben umfasst, und eine Antriebseinrichtung mit einem mit dem Zugelement in Wirkverbindung stehenden und das Zugelement in eine fortwährende Antriebsbewegung versetzenden Antriebsrad aufweist.

Die zum Antreiben des als Futterkette ausgebildeten Zugelements verwendeten Antriebsräder sind häufig gezahnt, wobei die im Wesentlichen radial nach außen abstehenden Zähne oder Mitnehmer direkt mit den entlang des Zugkörpers angeordneten Stauscheiben zum Erzeugen der Antriebsbewegung in Kontakt gelangen. Die in Umfangsrichtung zwischen zwei Zähnen oder Mitnehmern vorhandenen Täler oder Zwischenräume weisen eine Tiefe auf, welche in etwa dem Radius der Stauscheiben am Zugelement entsprechen. Für einen reibungslosen Transport des Futtermittels - dieses ist oft über mehrere hundert Meter zu bewegen - ist es entscheidend, dass die Stauscheiben an den Mitnehmern des Antriebsrades ungehindert ein- und ausgleiten können.

Das Zugelement unterliegt im Betrieb jedoch einem gewissen Verschleiß und einer dabei entstehenden Längung, was einen sich vergößernden Abstand zwischen benachbarten Stauscheiben zur Folge hat. Ist insbesondere der Abstand der Mitnehmer am Antriebsrad geringer als der Abstand zwischen den Stauscheiben, wirkt sich dieses nachteilig beim Eingleiten der Stauscheiben in die Zwischenräume zwischen den Mitnehmern des Antriebsrades aus. Mit zunehmender Kettenspannung "bocken" die Stauscheiben vermehrt auf den Stauscheibenanlageflächen der Mitnehmer des Antriebsrades auf. Beim Weiterdrehen des Antriebsrades führt dies dann zu einem ruckartigen Lösen der Stauscheibe am Mitnehmer, welches bewirkt, dass die Stauscheiben in die Zwischenräume zwischen die Mitnehmer einschlagen. Bei einem Abstand zwischen den Mitnehmern, der größer ist als der Abstand zwischen den benachbarten Stauscheiben, kommt es hingegen im Auslaufbereich des Zugelements am Antriebsrad zu einem erschwerten Ausgleiten der Stauscheiben.

Mit dem sich fortwährend wiederholenden Einschlagen der Stauscheiben in die Zwischenräume des Antriebsrades kommt es zu einer deutlich wahrnehmbaren Lärmemission an der Antriebseinrichtung. Ferner verursachen sowohl das Einschlagen der Stauscheiben am Antriebsrad als auch das erschwerte Auslaufen der Stauscheiben im Auslaufbereich eine unerwünschte Schwingung am Zugelement, die sich auf das gesamte System übertragen und nachhaltigen Schaden bis hin zu einem Bauteilversagen an Teilen des Stauscheibenförderers zur Folge haben kann.

Daher lag der vorliegenden Erfindung die Aufgabe zugrunde, ein Antriebsrad für einen Stauscheibenförderer, einen Stauscheibenförderer sowie eine Fütterungsanlage anzugeben, an denen insbesondere das Zusammenwirken zwischen dem Antriebsrad und dem Zugelement verbessert ist. Insbesondere lag der Erfindung die Aufgabe zugrunde, den Verschleiß im Betrieb des Stauscheibenförderers zu minimieren und darüber die Zuverlässigkeit des Gesamtsystems zu verbessern.

Die Erfindung löst die ihr zugrundeliegende Aufgabe bei einem Antriebsrad für einen Stauscheibenförderer mit den Merkmalen nach Anspruch 1. Insbesondere ist vorgesehen, dass an einem, mehreren oder allen Mitnehmern wenigstens ein Rollenelement angeordnet ist, welches dazu eingerichtet ist, als Kraftübertragungselement mit im Abstand entlang eines Zugkörpers angeordneten Stauscheiben eines Stauscheibenförderers in Anlage gebracht zu werden.

Die Erfindung macht sich vorliegend die Erkenntnis zunutze, dass mittels der an den Mitnehmern des Antriebsrades angeordneten bewegbaren Rollenelemente im Vergleich zu den sonst vorhandenen Stauscheibenanlageflächen ein vereinfachtes und vor allem ungehindertes Ein- und Ausgleiten der Stauscheiben in die und aus den Zwischenräumen benachbarter Mitnehmer am Antriebsrad ermöglicht ist. Insbesondere wird mit den erfindungsgemäßen Rollenelementen an den Mitnehmern ein hartes Einschlagen der Stauscheiben in die Mitnehmer-Zwischenräume oder auch ein ruckartiges Ausgleiten am Auslaufbereich vermieden, wodurch dem Entstehen einer zusätzlichen Lärmemission wie auch der Entstehung von Schwingungen im Zugelement entgegengewirkt ist. Selbst bei einer durch Abnutzung entstandenen Längung des Zugelements ermöglichen die Rollenelemente einen ungehinderten Weiterbetrieb. Mit den an den Mitnehmern bewegbar angeordneten Rollenelementen sind jeweils Stauscheibenanlagebereiche ausgebildet, die sich relativ zu den Mitnehmern am Antriebsrad bewegen und sich insbesondere der Relativbewegung der jeweils temporär mit dem Antriebsrad in Kontakt bringbaren Stauscheiben anpassen. Das Zugelement weist mittels der Rollenelemente insgesamt ein besseres Abrollverhalten bei der etwa über den halben Umfang des Antriebsrades erfolgenden Umlenkung auf. Die jeweils bewegbar an den Mitnehmern angeordneten Rollenelemente bilden dabei Kraftübertragungselemente für die vom Antriebsrad auf das Zugelement des Stauscheibenförderers zu übertragende Antriebsbewegung aus. In einer Ausgestaltung der Erfindung ist vorgesehen, dass nur an einigen Mitnehmern des Radkörpers ein Rollenelement angeordnet ist bzw. nur einige der Mitnehmer am Radkörper mit einem Rollenelement ausgerüstet sind.

Gemäß einer bevorzugten Weiterbildung des Antriebsrades ist an jedem Mitnehmer mindestens ein Rollenelement angeordnet.

Vorzugsweise weisen die Rollenelemente Drehachsen auf, die parallel zur Antriebswelle ausgerichtet sind. Mit mindestens einem an jedem Mitnehmer angeordneten Rollenelement, dessen Drehachse die gleiche Achsausrichtung wie die des Antriebsrades aufweist, ist das Angleichen der Relativbewegung zwischen dem Antriebsrad und dem Zugelement des Stauscheibenförderers, insbesondere mit den unmittelbar mit dem Antriebsrad in Kontakt bringbaren Stauscheiben, weiter verbessert. Speziell das Inkontakt- und Außerkontaktbringen der Stauscheiben im Ein- und Austrittsbereich mit den Mitnehmern am Antriebsrad ist mittels der jedem Mitnehmer zugeordneten und insbesondere parallel zur Antriebswelle drehenden Rollenelemente jeweils sicher und störungsfrei möglich. Jedes am Mitnehmer drehbar aufgenommene Rollenelement weist bzw. bildet wenigstens einen, bevorzugt zwei mit einer Stauscheibe des Zugelements in Anlage bringbare Stauscheibenanlagebereiche auf/aus, die sich bei Inkontakt- und Außerkontaktbringen der Stauscheiben mit den Rollenelementen mit den Stauscheiben mitbewegen.

Eine Weiterbildung des Antriebsrades sieht vor, dass jedes Rollenelement ein Paar von axial zueinander im Abstand angeordnete Rollenkörper aufweist oder im Bereich eines Mitnehmers zwei axial zueinander im Abstand angeordnete Rollenelemente angeordnet sind. Mithilfe der bevorzugt zwei im Bereich eines Mitnehmers angeordneten Rollenkörper oder Rollenelemente ist eine gleichmäßige Kraftwirkung an einer mit dem Mitnehmer in Anlage bringbaren Stauscheibe bewirkt. Vorzugsweise greifen die zwei Rollenkörper des Rollenelements oder die beiden separaten Rollenelemente zu beiden Seiten des insbesondere mittig zwischen den Rollenkörpern/Rollenelementen geführten Zugelements an der Stauscheibe an. In einer Ausgestaltung, in der zwei separate Rollenelemente an einem Mitnehmer vorgesehen sind, sind diese an zwei am Radkörper axial zueinander beabstandet angeordneten Mitnehmerfortsätzen drehbar gelagert. In einer bevorzugten Ausführung wird ein Mitnehmer am Antriebsrad somit aus insbesondere einem ersten Mitnehmerteil und einem zu diesem axial im Abstand angeordneten zweiten Mitnehmerteil ausgebildet.

Gemäß einer bevorzugten Weiterbildung weist jedes Rollenelement zwei die Enden des insbesondere einteilig ausgebildeten Rollenelements definierende Rollenkörper auf, wobei zwischen den Rollenkörpern eine Ausnehmung zum Führen des Zugkörpers vorgesehen ist. Ein derartig erfindungsgemäß ausgebildetes Rollenelement erstreckt sich über nahezu die gesamte axiale Breite des Antriebsrades, wobei die mit der Stauscheibe in Anlage bringbaren Rollenkörper jeweils am Ende des Rollenelements angeordnet sind. Das bevorzugt einteilig ausgebildete Rollenelement erstreckt sich zwischen zwei axial zueinander beabstandeten und sich radial nach außen erstreckenden Mitnehmerfortsätzen am Antriebsrad. An dem einteiligen Rollenelement ist zwischen den Rollenkörpern eine Ausnehmung zum Führen, insbesondere axialen Führen des mit die Stauscheiben ausgerüsteten Zugkörpers ausgebildet. Die Ausnehmung hat des Weiteren die Funktion, dass sich die Stauscheiben ausreichend weit in die Zwischenräume zwischen die Mitnehmer des Antriebsrades hineinbewegen können.

In einer bevorzugten Ausgestaltung ist vorgesehen, dass das Rollenelement einteilig ausgebildet ist, wobei vorzugsweise die Rollenkörper über ein Hülsenteil miteinander verbunden sind. An insbesondere einem einteilig ausgebildeten Rollenelement ist zwischen den Rollenkörpern ein im Durchmesser gegenüber den Rollenkörpern reduziertes Hülsenteil angeordnet. Mittels des Hülsenteils wird die Ausnehmung zwischen den Rollenkörpern in radialer Richtung begrenzt bzw. überbrückt. In einer bevorzugten Ausführung dient das zwischen den Rollenkörpern angeordnete Hülsenteil, welches die Rollenkörper insbesondere miteinander zu dem einteiligen Rollenelement verbindet, als Auflager für den sich bevorzugt auf den Hülsenteilen abstützenden Zugkörper. Damit lässt sich zum Beispiel bewirken, dass die Stauscheiben nicht bis auf den Grund der zwischen den Mitnehmern ausgebildeten Zwischenräume aufschlagen. Das Hülsenteil weist gegenüber den am Rollenelement endseitig angeordneten Rollenkörpern einen Durchmesser auf, der etwa halb so groß ist wie der Durchmesser der Rollenkörper.

Eine mögliche Ausgestaltung der Erfindung sieht vor, dass die Rollenelemente mittels Bolzen an den mehreren, insbesondere elf Mitnehmern des Antriebsrades drehbar gelagert sind. Mittels der Bolzen kann sowohl das einteilig ausgebildete Rollenelement als auch die zwei separaten Rollenelemente einfach und sicher an den in radialer Richtung am Antriebsrad nach außen vorstehenden Mitnehmern, insbesondere den zwei im Bereich der beiden Stirnseiten des Radkörpers angeordneten Mitnehmerfortsätzen eines Mitnehmers, befestigt werden. Das einteilig ausgebildete Rollenelement wird mittels eines Bolzens an einem Mitnehmer des Antriebsrades befestigt, der sich über die Gesamtbreite des Antriebsrades erstreckt. In der alternativen Ausgestaltung mit zwei separaten Rollenelementen an einem Mitnehmer wird jedes Rollenelement mittels eines entsprechend verkürzt ausgebildeten Bolzens einzeln an einem jeweils zu beiden Seiten des Antriebsrades vorhandenen Mitnehmerfortsatz eines Mitnehmers drehbar befestigt.

Eine Weiterbildung des erfindungsgemäßen Antriebsrades sieht vor, dass der Radkörper aus einem mit der Antriebswelle drehfest koppelbaren Zentralteil und mittels zweier zu beiden Seiten des Zentralteils angeordneter Mitnehmerkränze ausgebildet ist. Die Ausgestaltung des Radkörpers aus mehreren Einzelkomponenten ermöglicht eine strukturell vereinfachte Ausgestaltung und im Falle eines Defekts nur den Austausch von entsprechend betroffener Teile oder Komponenten. Zudem können mit der Ausgestaltung des Antriebsrades aus verschiedenen Einzelkomponenten bestimmte Bereiche des Antriebsrades entsprechend den darauf einwirkenden Kräften individuell ausgebildet und deren mechanischen Eigenschaften angepasst werden. Das mit der Antriebswelle koppelbare Zentralteil ist zur sicheren Übertragung der Antriebsbewegung eher steif auszuführen. Jeder der am Zentralteil anzuordnenden Mitnehmerkränze weist bevorzugt die an einer äußeren Umfangsfläche in radialer Richtung nach außen abstehenden Mitnehmer bzw. Mitnehmerfortsätze auf. Vorzugsweise ist an zwei in Achsrichtung gesehen deckungsgleich angeordneten Mitnehmerfortsätzen der zu beiden Seiten am Zentralteils angeordneten Mitnehmerkränze das einteilige ausgebildete Rollenelement oder an jedem Mitnehmerfortsatz jeweils ein Rollenelement angeordnet. Vorzugsweise weist jeder Mitnehmerkranz einen Ringkörper und die mehreren daran radial nach außen abstehenden Mitnehmerfortsätze auf.

Eine bevorzugte Weiterbildung des Antriebsrades sieht vor, dass das Zentralteil aus mehreren nebeneinander angeordneten und miteinander verbundenen Plattenteilen besteht, wobei jedes Plattenteil vorzugsweise mehrere auf einem Teilkreisdurchmesser verteilt angeordnete Durchbrüche aufweist. Mit der Verwendung von mehreren in der Materialstärke begrenzten Plattenteilen zur Ausgestaltung des Zentralteils ist im Vergleich zur Ausgestaltung des Zentralteils aus Vollmaterial eine vereinfachte Herstellung erreicht. Auch wenn mehrere Plattenteile gegebenenfalls nacheinander für die Herstellung des Zentralteils zu bearbeiten sind, ermöglicht dies, wegen der deutlich verringerten Bearbeitungstiefe an jedem Plattenteil, trotz allem eine deutlich vereinfachte Bearbeitung. In einer Ausführung sind neben dem Durchgang für die Antriebswelle an jedem der mehreren, drei, vier oder fünf Plattenteile und damit am Zentralteil insgesamt mehrere auf einem Teilkreisdurchmesser verteilt angeordnete Durchbrüche vorgesehen, mit denen das Gewicht des Zentralteils reduziert und so die Montage wie auch ein möglicher Austausch in Verbindung mit entsprechenden Wartungsarbeiten vereinfacht ist. Zudem kann mittels der mehreren, insbesondere vier, gleichmäßig verteilt angeordneten Durchbrüche, die sich ausgehend von der Mittenachse des Zentralteils etwa auf der Hälfte des Radius und über ein Drittel des Radius am Zentralteil vornehmlich in Umfangsrichtung erstrecken, gezielt Einfluss auf die Steifigkeit und das Schwingungsverhalten des Zentralteils genommen werden. In einer bevorzugten Ausführung weist das Zentralteil einen den Durchgang für die Antriebswelle vollumfänglich umgebenden Krafteinleitungsbereich, sich ausgehend vom Krafteinleitungsbereich vier in radialer Richtung nach außen erstreckende Kraftübertragungsstege und einen sich umfangsseitig an die Kraftübertragungsstege anschließenden kreisringförmigen Kraftableitungsbereich auf.

Gemäß einer bevorzugten Weiterbildung sind die Mitnehmerkränze mittels Schraubverbindungen mit dem Zentralteil verbunden, wobei vorzugsweise die Schraubverbindungen zusätzlich zum Koppeln der Plattenteile untereinander eingerichtet sind. Mithilfe der die Mitnehmerkränze am Zentralteil befestigenden Schraubverbindungen ist zusätzlich durch das gleichzeitig erfolgende Festlegen der mehreren, drei, vier oder fünf Plattenteile des Zentralteils zueinander eine Doppelfunktion erfüllt. Vorzugsweise sind die Schraubverbindungen im kreisringförmig ausgebildeten Kraftableitungsbereich des Zentralteils und den insbesondere daran außenseitig angeordneten und insbesondere deckungsgleich zum Kraftableitungsbereich angeordneten Mitnehmerkränzen vorgesehen. Die Schraubverbindungen sind vorzugsweise im Bereich einer radialen Verlängerung der am Zentralteil ausgebildeten Kraftübertragungsstege ausgebildet. Damit ist eine gezielte Kraftübertragung vom Krafteinleitungsbereich des Zentralteils in Richtung der gleichmäßig über den Umfang des Radkörpers verteilt angeordneten Mitnehmer mit den daran angeordneten Rollenelementen bewirkt. In einer bevorzugten Ausgestaltung sind an einem erfindungsgemäßen Antriebsrad vier Schraubverbindungen zum Koppeln der Mitnehmerkränze mit dem Zentralteil vorgesehen.

In einer Ausführung weist jeder Mitnehmerkranz mehrere im Umfangsbereich in radialer Richtung nach außen abstehende Mitnehmerfortsätze auf, wobei das einteilig ausgebildete Rollenelement zwischen zwei, insbesondere in Achsrichtung gesehen deckungsgleich angeordneten Mitnehmerfortsätzen der Mitnehmerkränze drehbar aufgenommen ist.

Vorzugsweise weist in einer möglichen Ausgestaltung der Radkörper auf seiner Umfangsfläche zumindest zwischen den in Umfangsrichtung zueinander benachbarten Mitnehmern bereichsweise eine konkav ausgebildete Kontur auf. Die zumindest in den Zwischenräumen zwischen den benachbarten Mitnehmern ausgebildete Umfangsfläche am Radkörper, an insbesondere dem Zentralteil, weist eine an die äußere Kontur der Stauscheiben, bevorzugt die sich durch deren Durchmesser ergebende konvexe Krümmung, angepasste konkav geformte Kontur auf. Insbesondere in der Ausgestaltung, in der am Radkörper zwei separate im Abstand zueinander angeordneten Rollenelemente vorgesehen sind, stützt sich das Zugelement des Stauscheibenförderers mit einem Abschnitt der äußeren Umfangsfläche der jeweils mit dem Antriebsrad zusammenwirkenden Stauscheiben in radialer Richtung gegen den bevorzugt formidentisch ausgeführten Umfangsbereich am Radkörper, insbesondere der Umfangsfläche des Zentralteils ab. Das Zentralteil ist insbesondere aus vier oder fünf nebeneinander angeordneten Plattenteilen ausgebildet, wobei die zwei oder drei inneren Plattenteile des Zentralteils Umfangsbereiche mit einer entsprechend an die Formgebung der Stauscheiben angepassten, konkav geformten Kontur haben. In einer bevorzugten Ausgestaltung weist das Zentralteil an seiner aus den Plattenteilen gebildeten äußeren Umfangsfläche eine konkav geformte Vertiefung auf, welche als ein etwa mittig angeordneter und sich über den gesamten Umfang umlaufender streifenförmiger Abschnitt ausgebildet ist.

Gemäß einer bevorzugten Ausgestaltung des Antriebsrades ist der Radkörper aus Metall, insbesondere Stahl, ausgebildet, wobei vorzugsweise die Plattenteile und die Mitnehmerkränze als Stanzteile ausgeführt sind. Mit der Ausgestaltung des Radkörpers aus Metall, insbesondere Stahl, weist dieser eine hohe Festigkeit gepaart mit einer vorteilhaften, begrenzten Verformungsfähigkeit auf. Durch die Ausgestaltung des Radkörpers, insbesondere des Zentralteils und der Mitnehmerkränze, aus Metall ergibt sich zudem eine vereinfachte Bearbeitbarkeit des zur Ausgestaltung des Radkörpers verwendeten Materials. Insbesondere können die das Zentralteil definierenden Plattenteile wie auch die zum Zentralteil separat ausgebildeten und daran befestigten Mitnehmerkränze als Stanzteil ausgeführt sein. Der Vorgang des Stanzens ermöglicht die Ausgestaltung vergleichsweise komplexer Geometrien an den zur Ausbildung des Radkörpers beteiligten Komponenten, die im Vergleich zu einer spanenden Bearbeitung deutlich einfacher herstellbar sind.

Die Erfindung betrifft gemäß einem weiteren Aspekt einen Stauscheibenförderer, insbesondere eine Futterketten-Vorrichtung zum Fördern von Futtermittel, aufweisend ein Zugelement, welches einen durchgehenden Zugkörper und entlang des Zugkörpers mit Abstand in Zugrichtung zueinander angeordnete Stauscheiben aufweist, und eine Antriebseinrichtung mit einem mit dem Zugelement in Wirkverbindung stehenden und das Zugelement fortwährend bewegenden Antriebsrad.

Die Erfindung löst auch die dem erfindungsgemäßen Stauscheibenförderer zugrunde gelegte Aufgabe, indem die Antriebseinrichtung ein Antriebsrad nach einer der vorstehend beschriebenen bevorzugten Ausführungsformen der Erfindung umfasst. Mit der erfindungsgemäßen Ausgestaltung des Antriebsrades ist insbesondere eine gleichmäßige und vor allem störungsfreie Antriebsbewegung des Zugelements am Stauscheibenförderer umsetzbar. Mit dem Vorsehen von Rollelementen an den Mitnehmern des Antriebsrades lässt sich die Lärmemission an dem erfindungsgemäß ausgebildeten Stauscheibenförderer verringern und zudem mögliche an dem Zugelement entstehende Schwingungen auf ein Minimum reduzieren. Gemäß einer bevorzugten Ausgestaltung ist das Zugelement als Endlos-Futterkette ausgebildet, welche beliebig lang ausgeführt sein kann und eine Vielzahl von untereinander verbundenen Kettengliedern aufweist.

In einer bevorzugten Ausgestaltung ist jedes zweite Kettenglied der Futterkette mit einer Stauscheibe ausgerüstet, wobei die Stauscheiben jeweils fest mit dem zugeordneten Kettenglied der Futterkette verbunden sind. In einer weiteren Ausgestaltung des Stauscheibenförderers ist vorgesehen, dass die Stauscheiben einen Durchmesser aufweisen der zur Höhe der Mitnehmer am Antriebsrad ein Verhältnis im Bereich von etwa 1,2 bis 2,5 aufweist, vorzugsweise im Bereich von etwa 1,5 bis 2,2. Darüber ist gewährleistet, dass die Stauscheibenanlagebereiche an den Rollenelementen etwa auf einem Viertel des Durchmessers der Stauscheiben angreifen bzw. ausgehend vom Außenumfang der Stauscheiben auf halber Höhe zwischen dem Außenumfang und dem die Stauscheiben durchdringenden Zugkörper mit den in den Zwischenräumen eingreifenden Stauscheiben in Anlage gelangen, was die Krafteinleitung in die Stauscheiben und somit in das Zugelement des Stauscheibenförderers weiter verbessert. Die Höhe des Mitnehmers bestimmt sich vorliegend ausgehend von der äußeren Umfangsfläche des Zentralteils am Antriebsrad bis zum obersten Punkt des an dem Mitnehmerfortsätzen angeordneten Rollenelements. Die Stauscheibenanlagebereiche an den Rollenelementen sind ausgehend vom obersten Punkt des Rollenelements am Antriebsrad um etwa ein Viertel des Umfangs versetzt dazu angeordnet bzw. ausgebildet.

In noch einem weiteren, insbesondere dritten Aspekt, betrifft die Erfindung eine Fütterungsanlage für die Trockenfütterung von Nutztieren, mit einem Antriebsrad gemäß einer der vorstehend beschriebenen bevorzugten Ausführungsformen gemäß dem ersten Aspekt oder einem Stauscheibenförderer nach zumindest einer der oben beschriebenen bevorzugten Ausführungsform gemäß dem dritten Aspekt. Die Fütterungsanlage für die Trockenfütterung von Nutztieren, insbesondere von Schweinen, weist in einer Ausführung ein Futtersilo, eine mit dem Futtersilo verbundene Futterleitung und wenigstens eine entlang eines Abschnitts der Futterleitung angeordnete Futterstation sowie einen mit der Futterleitung zusammenwirkenden Stauschiebenförderer auf. Die Futterleitung ist vorliegend Teil des Stauscheibenförderers, innerhalb derer das Zugelement, insbesondere die Futterkette, mit ihrem durchgehenden Zugkörper und entlang des Zugkörpers mit Abstand in Zugrichtung zueinander angeordneten Stauscheiben verläuft. In einem dem Futtersilo vorgelagerten Abschnitt der Fütterungsanlage ist die Antriebseinrichtung des Stauscheibenförderers vorgesehen, der mindestens das mit dem Zugelement in Wirkverbindung stehende und das Zugelement endlos umlaufend antreibende Antriebsrad aufweist.

In noch einem weiteren Aspekt betrifft die Erfindung die Verwendung eines Antriebsrades gemäß einer der vorstehend beschriebenen bevorzugten Ausführungsformen zum Antreiben einer Futterkette, welche zum Fördern von Futtermittel in einer Fütterungsanlage für die Trockenfütterung von Nutztieren eingerichtet ist. Mit der Verwendung eines derartig erfindungsgemäß ausgebildeten Antriebsrades ist vor allem ein geräuscharmes und insbesondere schwingungsminimiertes Antreiben der Futterkette, welche zum Fördern von Futtermittel in einer Fütterungsanlage eingerichtet ist, möglich.

Die zum erfindungsgemäßen Antriebsrad beschriebenen bevorzugten Ausführungsformen bzw. Weiterbildungen sind zugleich auch bevorzugte Ausführungsformen des erfindungsgemäßen Stauscheibenförderers gemäß dem zweiten Aspekt, der erfindungsgemäßen Fütterungsanlage gemäß dem dritten Aspekt sowie der erfindungsgemäßen Verwendung des erfindungsgemäßen Antriebsrades gemäß dem vierten Aspekt. Die zum Stauscheibenförderer, zur Fütterungsanlage oder zur Verwendung des Antriebsrades beschriebenen, bevorzugten Ausführungsformen bzw. Weiterbildungen, welche sich auf das Antriebsrad selbst beziehen, sind zugleich auch bevorzugte Ausführungsformen des Antriebsrades gemäß dem ersten Aspekt.

Die Erfindung wird im Folgenden anhand eines bevorzugten Ausführungsbeispiels unter Bezugnahme auf die beigefügten Figuren näher beschrieben. Hierbei zeigen:
- Fig. 1:: eine perspektivische Ansicht einer ersten Ausführungsform eines erfindungsgemäßen Antriebsrades;
- Fig. 2:: eine Draufsicht auf das Antriebsrad nach Fig. 1;
- Fig. 3:: eine perspektivische Ansicht einer weiteren Ausführungsform eines erfindungsgemäßen Antriebsrades in Teilen als Explosionsdarstellung;
- Fig. 4:: eine Draufsicht auf das Antriebsrad nach Fig. 3;
- Fig. 5:: eine Ansicht einer Antriebseinrichtung eines Stauscheibenförderers mit einem daran angeordneten erfindungsgemäßen Antriebsrad;
- Fig. 6:: eine vergrößerte Darstellung des Antriebsrades der Antriebseinrichtung nach Fig. 5, und
- Fig. 7:: eine Ansicht einer erfindungsgemäßen Fütterungsanlage mit einem erfindungsgemäßen Stauscheibenförderer.

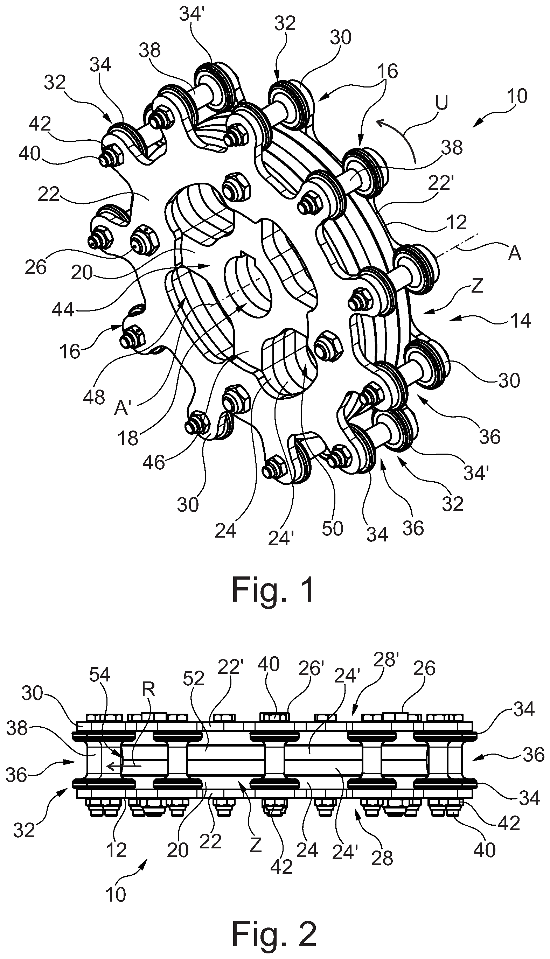

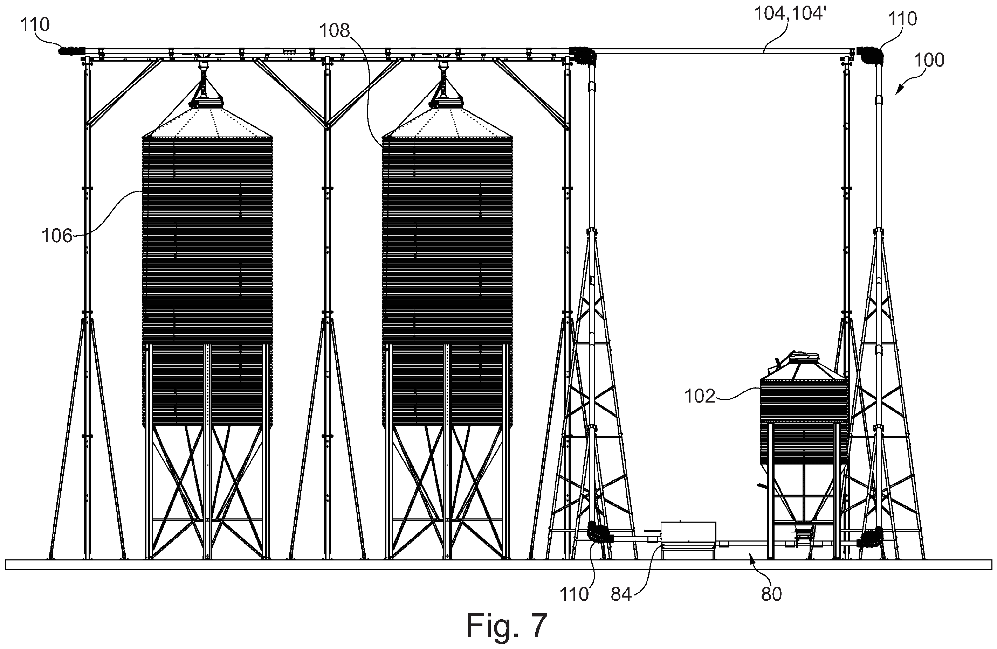

Fig. 1 zeigt ein Antriebsrad 10 für einen in Fig. 7 näher gezeigten Stauscheibenförderer 80, das einen Radkörper 12 und mehrere, insbesondere eine Vielzahl von am Umfangsbereich 14 des Radkörpers 12 in etwa radialer Richtung abstehende Mitnehmer 16 aufweist. Der Radkörper 12 weist einen axialen Durchgang 18 zur Aufnahme einer Antriebswelle 82 einer Antriebseinrichtung 84 des Stauscheibenförderers 80 auf.

Der Radkörper 12 umfasst in der vorliegend gezeigten Ausführung ein mit der Antriebswelle 62 drehfest koppelbares Zentralteil 20 und zwei an beiden Stirnseiten 28, 28' des Zentralteils 20 angeordnete Mitnehmerkränze 22, 22'.

Das Zentralteil 20 besteht insbesondere aus mehreren nebeneinander angeordneten und miteinander verbundenen Plattenteilen 24, 24'. Insbesondere ist das Zentralteil 20 aus insgesamt vier Plattenteilen 24, 24' ausgebildet. Die Plattenteile 24, 24' sind mittels mehrerer, insbesondere vier Schraubverbindungen 26 untereinander verbunden, wobei mithilfe der Schraubverbindungen 26 gleichzeitig die Mitnehmerkränze 22, 22' mit den Stirnseiten 28, 28' des Zentralteils 20 kraftübertragend gekoppelt sind.

Jeder Mitnehmerkranz 22, 22' weist entsprechend der Anzahl der am Radkörper 12 vorhandenen Mitnehmer 16 eine entsprechende Anzahl von sich radial nach außen erstreckenden Mitnehmerfortsätzen 30 auf, welche vorliegend zum indirekten Zusammenwirken mit einem Zugelement 86 des Stauscheibenförderers 80 eingerichtet sind.

In der vorliegend gezeigten Ausführung sind an den Mitnehmern 16 des Radkörpers 12 bzw. an den Mitnehmerfortsätzen 30 der Mitnehmerkränze 22, 22' Rollenelemente 32 angeordnet, welche dazu eingerichtet sind, als Kraftübertragungselemente mit den im Abstand D entlang eines Zugkörpers 88 angeordneten Stauscheiben 90 des Zugelements 86 am Stauscheibenförderer 80 in Anlage gebracht zu werden. Zudem wird mit den Rollenelemente 32 das Ein- und Ausgleiten der Stauscheiben 90 in einen und aus einem Zwischenraum Z zwischen zwei in Umfangsrichtung U benachbarte Mitnehmer 16 am Antriebsrad 10 vereinfacht. Jedes Rollenelement 32 weist eine Drehachse A auf, die parallel zur Mittenachse A' der Antriebswelle 84 für das Antriebsrad 10 verläuft.

In der vorliegenden Ausführung weist jedes Rollenelement 32 zwei die Enden des insbesondere einteilig ausgebildeten Rollenelements 32 definierende Rollenkörper 34, 34' auf.

Zwischen den Rollenkörpern 34, 34' ist eine Ausnehmung 36 zum zumindest axialen Führen des mit den Stauscheiben 90 versehenen Zugkörpers 88 vorgesehen. In der gezeigten Ausführung ist zwischen den Rollenkörpern 34, 34' ein Hülsenteil 38 angeordnet, insbesondere sind die Rollenkörper 34, 34' über das Hülsenteil 38 miteinander verbunden. Das Hülsenteil 38 weist einen gegenüber dem Durchmesser der Rollenkörper 34, 34' etwa um die Hälfte verringerten Durchmesser auf. Jedes Rollenelement 32 ist mittels eines Bolzens 40 an dem Mitnehmer 16, insbesondere den Mitnehmerfortsätzen 30, drehbar gelagert, der über eine Sicherungsmutter 42 an den Mitnehmern 16 befestigt ist.

Wie ferner aus Fig. 1 zu entnehmen ist, weist jedes Plattenteil 24, 24' einen Krafteinleitungsbereich 44 auf, in dem der Durchgang 18 für die Antriebswelle 82 ausgebildet ist. An den Krafteinleitungsabschnitt 44 schließen sich vier Kraftübertragungsstegen 46 an, welche in einen kreisringförmigen Kraftableitungsbereich 48 übergehen. Die Kraftübertragungsstege 46 sind über am Zentralteil 20 gleichmäßig verteilt angeordnete Durchbrüche 50 voneinander getrennt.

In einer Ausführung der Erfindung ist vorgesehen, dass das zwischen den Rollenkörpern 34, 34' angeordnete Hülsenteil 38 jeweils als Auflager für das als Futterkette 86' ausgebildete Zugelement 86 fungiert. Die Kettenglieder 92 des als Futterkette 86' ausgebildeten Zugelements 86 werden beim Führen über das Antriebsrad10 von den Hülsenteilen 38 in radialer Richtung abgestützt. Der radiale Abstand R der Hülsenteilen 38 an den Mitnehmern 16 des Antriebsrades 10 zu der äußeren Umfangsfläche 52 des Zentralteils 20 ist derart dimensioniert, dass in einer Ausführung die Stauscheiben 90 am Zugelement 86 nicht mit der äußeren Umfangsfläche 54 in Kontakt gelangen.

In der in Fig.2 gezeigten Ausführung weist der Radkörper 12, insbesondere das Zentralteil 20, auf seiner äußeren Umfangsfläche 54 in axialer Richtung gesehen bereichsweise eine konkav geformte Kontur 54 auf. Die konkav geformte Kontur ist insbesondere an die insbesondere kreisförmige Kontur 94 der Stauscheiben 90 angepasst. In einer Ausführung kann vorgesehen sein, dass die Stauscheiben 90, wenn diese mit dem Antriebsrad 10 zusammenwirken, mit ihrer äußeren Kontur 94 mit der komplementär ausgebildeten Kontur 54 an der äußeren Umfangsfläche 52 des Zentralteils 20 aufsitzen.

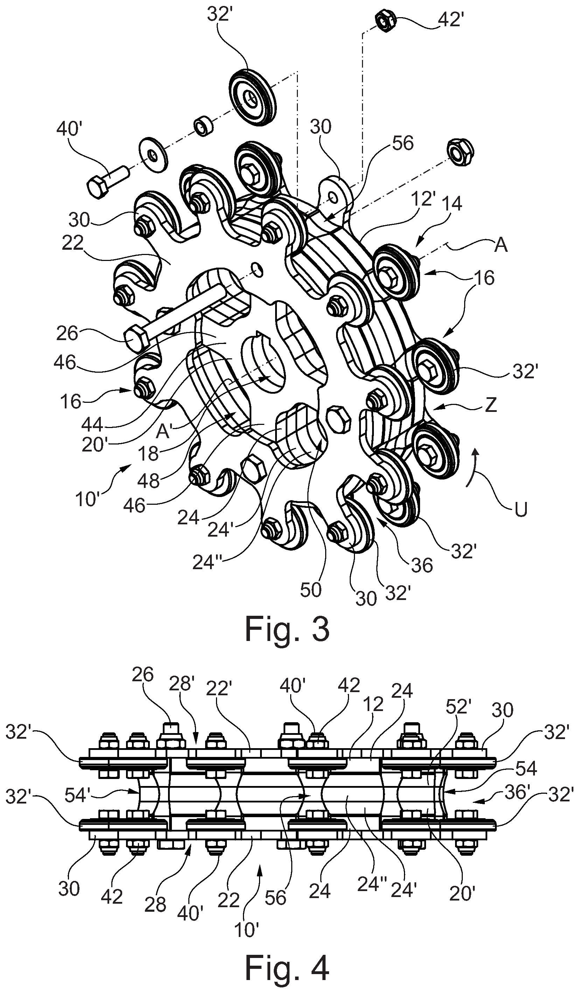

Fig. 3 zeigt eine weitere Ausführungsform eines Antriebsrades 10' mit einem Radkörper 12', der an seinem Umfangsbereich 14 ebenfalls eine Vielzahl, insbesondere elf in im Wesentlichen radialer Richtung abstehende Mitnehmer 16 aufweist, an denen jeweils zwei

Rollelemente 32' angeordnet sind. Die Rollelemente 32' dienen ebenfalls als Kraftübertragungselemente, mit denen die am Zugelement 86 im Abstand D entlang des Zugkörpers 88 angeordneten Stauscheiben 90 während des Antriebsvorgangs des als Futterkette ausgebildeten Zugelements 86 in Anlage gebracht werden. Das in Fig. 3 und 4 gezeigte Antriebsrad 10' ist sehr ähnlich zu der in den Fig. 1 und 2 gezeigten Ausführungsform des Antriebsrades 10, wobei insbesondere auf die grundlegende Ausgestaltung des in den Fig. 3 und 4 gezeigten Zentralteils 20' und der daran befestigten Mitnehmerkränze 22, 22' auf die obigen Ausführungen verwiesen wird. Nachfolgend werden die bestehenden Unterschiede des Antriebsrades 10' zu der oben beschriebenen Ausführungsform herausgestellt.

Statt eines einteiligen Rollenelements 32 weist das Antriebsrad 10' ein zwei Rollenelemente 32' auf, die separat zueinander ausgebildet und jeweils einzeln an den Mitnehmerfortsätzen 30 der Mitnehmerkränze 22, 22' angeordnet sind. Jedes Rollenelement 32' wird, wie aus Fig. 3 zu entnehmen, über jeweils einzelne Bolzen 40' und die Bolzen sichernde Sicherungsmuttern 42 an den Mitnehmerfortsätzen 30 befestigt. Auch die einzeln aufgenommenen Rollenelemente 32' sind drehbar an den Mitnehmerfortsätzen 30 befestigt. In der in Fig. 3 gezeigten Ausführung ist somit im Bereich der Mitnehmer 16 eine bis auf die äußere Umfangsfläche 52' des Zentralteils 20' gerichtete Ausnehmung 36' ausgebildet.

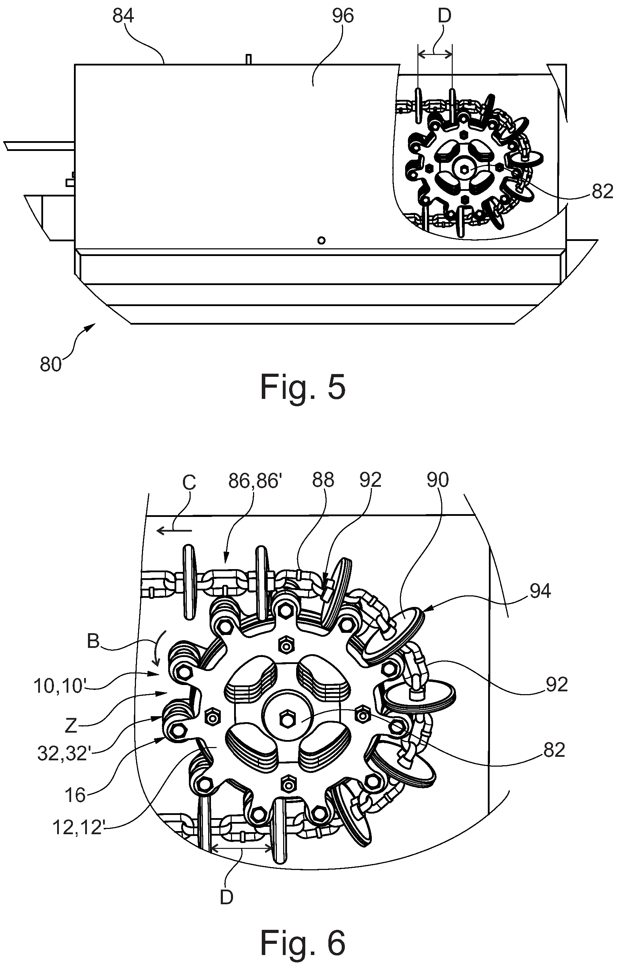

Am Antriebsrad 10' ist statt über das am Antriebsrad 10 vorhandene Hülsenteil die in radialer Richtung erfolgende Stützfunktion während des Aufbringens der Antriebsbewegung am Stauscheibenförderer 80 allein über die konkav geformte Kontur 54' in den Zwischenräumen Z zwischen den Mitnehmern 16 an der äußeren Umfangsfläche 52' des Zentralteils 20' umgesetzt. Die Stauscheiben 90 an dem als Futterkette 86' ausgebildeten Zugelement 86 (Fig. 5, 6) sind direkt in Anlage mit dem Radkörper 12'. Über die sich an der Umfangsfläche 52' abstützenden Stauscheiben 90 erfolgt insbesondere gleichzeitig eine axiale Führung des um einen Umfangsabschnitt des Antriebsrades 10' geführten Zugelements 86. Das Zugelement 86, insbesondere die Kettenglieder 94 an der Futterkette 86', verlaufen ebenfalls zwischen den im Abstand zueinander angeordneten, separaten Rollenelementen 32'.

In der vorliegend gezeigten Ausführung besteht das Zentralteil 20' aus insgesamt fünf nebeneinander angeordneten und miteinander verbundenen Plattenteilen 24, 24', 24", wobei der Radkörper 12', insbesondere das Zentralteil 20', auf seiner äußeren Umfangsfläche 52' nur zwischen den in Umfangsrichtung U zueinander benachbarten Mitnehmern bereichsweise eine konkav geformte Kontur 54' aufweist. Die konkav geformte Kontur ist insbesondere an den drei mittleren Plattenteilen 24', 24" des Zentralteils 20' ausgebildet.

Ferner ist zusätzlich der in den Fig. 1 und 2 gezeigten Ausführung im Umfangsbereich des Zentralteils 20' zwischen den zu beiden Stirnseiten 28, 28' angeordneten Mitnehmerfortsätzen 30 eine in axialer Richtung verlaufende Vertiefung 56 vorgesehen, mittels derer die Freigängigkeit der Rollenelemente 32' gegenüber der äußeren Umfangsfläche 52' des Zentralteils 20' gewährleistet ist.

In den Fig. 5 und 6 ist eine Ausführungsform eines erfindungsgemäßen Stauscheibenförderers 80 mit einer Antriebseinrichtung 84 gezeigt. Die Antriebseinrichtung 84 weist einen nicht näher dargestellten, mit dem Antriebsrad 10, 10' über die Antriebswelle 82 gekoppelten Antriebsmotor auf, der das Antriebsrad 10, 10' in eine gleichmäßige Drehbewegung B versetzt. Wie aus den Fig. 5 und 6 ersichtlich, wird die erzeugte Drehbewegung B am Antriebsrad 10, 10' mittels der mit den Mitnehmern 16 am Antriebsrad 10, 10' in Anlage bringbaren Stauscheiben 90 in eine endlos umlaufende Antriebsbewegung C des als Endlos-Futterkette 86' ausgebildeten Zugelements 86 umgewandelt. Die an den Mitnehmern 16 angeordneten Rollenelemente 32, 32' ermöglichen ein ungehindertes Ein- und Ausgleiten in die zwischen die Mitnehmer 16 vorhandenen Zwischenräume Z. Zudem weist die Antriebseinrichtung 84 ein die Komponenten einhausendes Gehäuse 96 auf.

Fig. 7 zeigt eine Fütterungsanlage 100 für die Trockenfütterung von Nutztieren. Die Fütterungsanlage 100 umfasst ein Futtersilo 102, von dem aus Trockenfutter über eine Futterleitung 104 zu zwei nachgelagerten Silos 106, 108 für die Weiterverarbeitung gefördert wird. Die Futterleitung 104 ist in der vorliegend gezeigten Ausführung als Förderrohr 104' ausgebildet und weist mehrere Umlenkbereiche 110 auf. Innerhalb der Futterleitung 104 verläuft eine in Fig. 5, 6 gezeigte Futterkette 86', die einen Zugkörper 88 aus einer Vielzahl von Kettengliedern 92 aufweist. Entlang des Zugkörpers 88 sind in vorbestimmten Abständen D die Stauscheiben 90 angeordnet. Vorliegend ist an jedem zweiten Kettenglied 92 eine Stauscheibe 90 angeordnet. In einem dem Futtersilo 102 vorgelagerten Abschnitt der Futterleitung 104 ist die Antriebseinrichtung 84 angeordnet, mittels derer das als Endlos-Futterkette 86' ausgebildete Zugelement 86 des als Futterketten-Vorrichtung ausgebildeten Stauscheibenförderers 80, eine Transportbewegung für das Futtermittel umsetzend, angetrieben wird.

### Bezugszeichenliste:

- 10, 10': Antriebsrad
- 12, 12': Radkörper
- 14: Umfangsbereich
- 16: Mitnehmer
- 18: Durchgang
- 20, 20': Zentralteil
- 22, 22': Mitnehmerkranz
- 24, 24', 24": Plattenteil
- 26: Schraubverbindung
- 28, 28': Stirnseite
- 30: Mitnehmerfortsatz
- 32, 32': Rollenelement
- 34, 34': Rollenkörper
- 36, 36': Ausnehmung
- 38: Hülsenteil
- 40, 40': Bolzen
- 42: Sicherungsmutter
- 44: Krafteinleitungsbereich
- 46: Kraftübertragungssteg
- 48: Kraftableitungsbereich
- 50: Durchbruch
- 52, 52': Umfangsfläche
- 54, 54': Kontur
- 56: Vertiefung
- 80: Stauscheibenförderer
- 82: Antriebswelle
- 84: Antriebseinrichtung
- 86: Zugelement
- 86': Futterkette
- 88: Zugkörper
- 90: Stauscheibe
- 92: Kettenglied
- 94: Kontur
- 96: Gehäuse
- 100: Fütterungsanlage
- 102: Futtersilo
- 104: Futterleitung
- 104': Förderrohr
- 106, 108: Silo
- 110: Umlenkbereich
- A: Drehachse
- A': Mittenachse Antriebswelle
- B: Drehbewegung
- C: Antriebsbewegung
- D: Abstand
- U: Umfangsrichtung
- R: radialer Abstand
- Z: Zwischenraum

## Patentansprüche

1. Antriebsrad (10, 10') für einen Stauscheibenförderer (80), insbesondere für eine Futterketten-Vorrichtung zum Fördern von Futtermittel für die Trockenfütterung von Nutztieren, aufweisend:
- einen mit einem axialen Durchgang (18) zur Aufnahme einer Antriebswelle (82) versehenen Radkörper (12, 12'), und
- mehrere am Umfangsbereich (14) des Radkörpers (12, 12') in im Wesentlichen radialer Richtung abstehende Mitnehmer (16),
**dadurch gekennzeichnet, dass** an einem, mehreren oder allen Mitnehmern (16) wenigstens ein Rollenelement (32, 32') angeordnet ist, welches dazu eingerichtet ist, als Kraftübertragungselement mit im Abstand entlang eines Zugkörpers (88) angeordneten Stauscheiben (90) eines Stauscheibenförderers (80) in Anlage gebracht zu werden.

2. Antriebsrad (10, 10') nach Anspruch 1,
**dadurch gekennzeichnet, dass** die Rollenelemente (32, 32') Drehachsen (A) aufweisen, die parallel zur Antriebswelle (82) ausgerichtet sind.

3. Antriebsrad (10, 10') nach Anspruch 1 oder 2,
**dadurch gekennzeichnet, dass** jedes Rollenelement (32) ein Paar von axial zueinander im Abstand angeordnete Rollenkörper (34, 34') aufweist oder im Bereich eines Mitnehmers (16) zwei axial zueinander im Abstand angeordnete Rollenelemente (32') angeordnet sind.

4. Antriebsrad (10, 10') nach einem der Ansprüche 1 bis 3,
**dadurch gekennzeichnet, dass** zwischen den Rollenelementen (32, 32') oder Rollenkörpern (34, 34') eine Ausnehmung (36, 36') zum Führen des Zugkörpers (88) vorgesehen ist, wobei vorzugsweise die Rollenkörper (34, 34') die Enden des insbesondere einteilig ausgebildeten Rollenelements (32) definieren.

5. Antriebsrad (10, 10') nach einem der vorstehenden Ansprüche 3 oder 4,
**dadurch gekennzeichnet, dass** das Rollenelement (32) einteilig ausgebildet ist, wobei vorzugsweise die Rollenkörper (34, 34') über ein Hülsenteil (38) miteinander verbunden sind.

6. Antriebsrad (10, 10') nach einem der vorstehenden Ansprüche,
**dadurch gekennzeichnet, dass** die Rollenelemente (32, 32') mittels Bolzen (40, 40') an den Mitnehmern (16) drehbar gelagert sind.

7. Antriebsrad (10, 10') nach einem der vorstehenden Ansprüche,
**dadurch gekennzeichnet, dass** der Radkörper (12, 12') aus einem mit der Antriebswelle (82) drehfest koppelbare Zentralteil (20, 20') und mittels zweier zu beiden Stirnseiten (28, 28') des Zentralteils (20, 20') angeordneter Mitnehmerkränze (22, 22') ausgebildet ist.

8. Antriebsrad (10, 10') nach Anspruch 7,
**dadurch gekennzeichnet, dass** das Zentralteil (20, 20') aus mehreren nebeneinander angeordneten und miteinander verbundenen Plattenteilen (24, 24', 24") besteht, wobei jedes Plattenteil (24, 24', 24") vorzugsweise mehrere auf einem Teilkreisdurchmesser verteilt angeordnete Durchbrüche (50) aufweist.

9. Antriebsrad (10, 10') nach Anspruch 7 oder 8,
**dadurch gekennzeichnet, dass** die Mitnehmerkränze (22, 22') mittels Schraubverbindungen (26) mit dem Zentralteil (20, 20') verbunden sind, wobei vorzugsweise die Schraubverbindungen (26) zusätzlich zum Koppeln der Plattenteile (24, 24', 24") untereinander eingerichtet sind.

10. Antriebsrad (10, 10') nach einem der Ansprüche 7 bis 9,
**dadurch gekennzeichnet, dass** jeder Mitnehmerkranz (22, 22') mehrere im Umfangsbereich in radialer Richtung nach außen abstehende Mitnehmerfortsätze (30) aufweist, wobei das Rollenelement (32) zwischen zwei Mitnehmerfortsätzen (30) der Mitnehmerkränze (22, 22') aufgenommen ist und insbesondere mittels einer Schraubverbindung mit den Mitnehmerfortsätzen (30) verbunden ist.

11. Antriebsrad (10, 10') nach einem der vorstehenden Ansprüche,
**dadurch gekennzeichnet, dass** der Radkörper (12, 12') auf seiner Umfangsfläche (52, 52') zumindest zwischen den in Umfangsrichtung (U) zueinander benachbarten Mitnehmern (16) bereichsweise eine konkav ausgebildete Kontur (54, 54') aufweist.

12. Antriebsrad (10, 10') nach einem der vorstehenden Ansprüche,
**dadurch gekennzeichnet, dass** der Radkörper (12, 12') aus Metall, insbesondere Stahl ausgebildet ist, wobei vorzugsweise die Plattenteile (24, 24', 24") und die Mitnehmerkränze (22, 22') als Stanzteile ausgeführt sind.

13. Stauscheibenförderer (80), insbesondere Futterketten-Vorrichtung zum Fördern von Futtermittel, aufweisend:
- ein Zugelement (86), welches einen durchgehenden Zugkörper (88) und entlang des Zugkörpers (88) mit Abstand (D) in Zugrichtung zueinander angeordnete Stauscheiben (90) aufweist, und
- eine Antriebseinrichtung (84) mit einem mit dem Zugelement (86) in Wirkverbindung stehenden und das Zugelement (86) fortwährend bewegenden Antriebsrad (10, 10'), wobei das Antriebsrad (10, 10') nach einem der vorstehenden Ansprüche ausgebildet ist,
insbesondere wobei die Stauscheiben (90) einen Durchmesser aufweisen der zur Höhe der Mitnehmer (16) am Antriebsrad (10, 10') ein Verhältnis im Bereich von etwa 1,2 bis 2,5 aufweist.

14. Fütterungsanlage (100) für die Trockenfütterung von Nutztieren, mit einem Antriebsrad (10, 10') nach einer der Ansprüche 1 bis 12 oder einem Stauscheibenförderer (80) nach Anspruch 13.

15. Verwendung eines Antriebsrades (10, 10') nach einer der vorstehenden Ansprüche 1 bis 12 zum Antreiben einer Futterkette (86'), welche zum Fördern von Futtermittel in einer Fütterungsanlage (100) für die Trockenfütterung von Nutztieren eingerichtet ist.
